**Europäisches Patentamt**

**European Patent Office**

**Office européen des brevets**

(19)

(11) Veröffentlichungsnummer : **0 329 986 B1**

## (12) EUROPÄISCHE PATENTSCHRIFT

(45) Veröffentlichungstag der Patentschrift :
**12.06.91 Patentblatt 91/24**

(51) Int. Cl.$^5$ : **G01B 11/30**

(21) Anmeldenummer : **89101742.8**

(22) Anmeldetag : **01.02.89**

(54) **Verfahren und Vorrichtung zur optischen Erfassung des Rauheitsprofils einer Materialoberfläche.**

(30) Priorität : **24.02.88 DE 3805785**

(43) Veröffentlichungstag der Anmeldung :
**30.08.89 Patentblatt 89/35**

(45) Bekanntmachung des Hinweises auf die
Patenterteilung :
**12.06.91 Patentblatt 91/24**

(84) Benannte Vertragsstaaten :
**AT CH DE ES FR GB IT LI SE**

(56) Entgegenhaltungen :
**CH-A- 552 197**
**DD-A- 145 956**
**DE-A- 3 428 435**
**DE-B- 2 332 813**
**GB-A- 894 570**
**US-A- 3 667 846**
**US-A- 4 218 144**

(73) Patentinhaber : **Erwin Sick GmbH**
**Optik-Elektronik**
**Sebastian-Kneipp-Strasse 1**
**W-7808 Waldkirch (DE)**

(72) Erfinder : **Weber, Klaus, Dr.**
**Baumgartenstrasse 22**
**W-7923 Königsbronn (DE)**
Erfinder : **Pettinger, Herbert**
**Zechstrasse 10**
**W-8021 Schäftlarn (DE)**
Erfinder : **Pietzsch, Karl, Dr.**
**Richard-Wagner-Strasse 2**
**W-8192 Geretsried (DE)**

(74) Vertreter : **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**W-8000 München 22 (DE)**

EP 0 329 986 B1

## Beschreibung

Die Erfindung betrifft ein Verfahren zur optischen Erfassung des Rauheitsprofils einer bewegten Materialoberfläche, bei dem auf der Materialoberfläche ein feiner Lichtfleck erzeugt und das reflektierte Licht einer Lichtempfangsanordnung zugeführt wird. Die Erfindung betrifft ferner eine Vorrichtung zur Durchführung des Verfahrens.

Oberflächenprofile werden meist durch eine direkte mechanische Profilmessung mittels des sogenannten Tastschnittverfahrens unter Verwendung einer Diamantspitze ermittelt. Dieses Standardmeßverfahren ist zwar universell bei praktisch sämtlichen technischen Oberflächen einsetzbar. Das Verfahren ist jedoch relativ langsam und kann leicht zu einer Beschädigung der betreffenden Materialoberfläche führen. Ungünstig ist ferner, daß eine Messung am laufenden Gut nicht vorgenommen werden kann.

Es werden auch bereits direkte optische Profilmeßverfahren angewandt, bei denen beispielsweise ein optischer Tastkopf mit feinem Lichtfleck und eine Nachfokussierung des Objektivs als Höhenmaß (OPTIC COMMUNICATIONS, Volume 31, No. 3, 1979) oder eine optische Abtastung durch ein nichtnachfokussierendes Objektiv (EP-A-0 234 997) vorgesehen ist, bei der das Höhenmaß durch die Differenz zweier Empfangssignale erhalten wird. Im ersten Fall ist zwar eine berührungslose, für alle Rauheitsbereiche universelle optische Messung möglich. Das Verfahren ist jedoch wiederum relativ langsam (bis ca. 500 Hz) und relativ einstell- und erschütterungsempfindlich. Im zweiten Falle kann die Messung schneller durchgeführt werden. Hierbei ergibt sich jedoch ein eingeschränkter Höhenmeßbereich sowie eine relativ hohe Empfindlichkeit gegenüber Erschütterungen.

Eine indirekte Aussage über die mittlere Rauheit erhält man beispielsweise durch eine optische Erfassung der von der Materialoberfläche erzeugten Streukeule (DE-A-30 37 622). Diese einfache, integrale Methode ist praktisch unempfindlich gegenüber Erschütterungen. Von Nachteil ist jedoch insbesondere, daß die Messung auf Profilhöhen beschränkt ist, die kleiner als die Wellenlänge $\lambda$ des verwendeten Lichts sind und eine Aussage über die jeweilige Profilform nicht möglich ist. Darüberhinaus können die erhaltenen Meßwerte mehrdeutig sein und eine klare Zuordnung zu definierten Rauheitsprofilen bzw. Rauheitskennzahlen erschweren bzw. ausschließen.

Der Erfindung liegt die Aufgabe zugrunde, ein Verfahren sowie eine Vorrichtung der eingangs genannten Art zu schaffen, bei welchen die vorgenannten Nachteile beseitigt sind und welche insbesondere auch an schnell durchlaufenden Materialien mit Profilhöhen die größer als die Wellenlänge $\lambda$ des verwendeten Lichts sind, eine entsprechend rasche und erschütterungsunempfindliche Messung gestatten.

Die Aufgabe wird bei dem erfindungsgemäßen Verfahren dadurch gelöst, daß für jeden abgetasteten Punkt der Materialoberfläche der Reflexionswinkel des reflektierten Lichts und damit der jeweilige Oberflächen-Neigungswert ermittelt wird, daß das Rauheitsprofil aus den entlang der abgetasteten Punktfolge erhaltenen Neigungswerten rekonstruiert wird, daß zur Ermittlung der Reflexionswinkel jeweils der Richtungsschwerpunkt des gestreut reflektierten Lichts erfaßt wird, und daß die Rekonstruktion des Rauheitsprofils bzw. des Profilschnitts entlang der abgetasteten Punktfolge durch Integration der Neigungswerte längs der abgetasteten Punktfolge durchgeführt wird.

Aufgrund dieser Ausbildung können Messungen des Rauheitsprofils auch an relativ schnell durchlaufenden Materialien bzw. mit einer relativ hohen Meßgeschwindigkeit durchgeführt werden. Die auftretenden Profilhöhen können hierbei wesentlich größer als die Wellenlänge $\lambda$ des verwendeten Lichts sein. Auch in diesen Fällen ist stets eine eindeutige Rekonstruktion des betreffenden Rauheitsprofils aus den erhaltenen Neigungswerten möglich.

Die Erfindung ist beispielsweise für die Überwachung der Rauheit von kaltgewalztem Blech für Karosserieteile direkt an der Walzstraße geeignet.

Während bei der eingangs genannten integralen Streukeulenauswertung aufgrund der Rauhheitsbereiche von Karosserieblechen ($R_a$ = 0,8 bis 2,5 µm) lediglich ein $CO_2$-Laser ($\lambda$ = 10,5 µm) verwendbar ist, kann beim erfindungsgemäßen Verfahren bzw. bei der erfindungsgemäßen Vorrichtung eine wesentlich handlichere Laserdiode als Strahlungsquelle eingesetzt werden. Das erfindungsgemäße Meßverfahren ist darüberhinaus ohne weiteres auch noch bei Oberflächenprofilen mit Profilhöhen von beispielsweise 100 µm anwendbar.

Die Rekonstruktion des Rauheitsprofils bzw. des Profilschnitts entland der abgetasteten Punktfolge wird durch Integration bzw. Aufsummierung der Neigungswerte längs der abgetasteten Punktfolge durchgeführt. Die ermittelten Schwerpunktwinkel bzw. Neigungswerte können gegebenenfalls zwischengespeichert oder gepuffert werden, so daß der eigentliche Meßvorgang unabhängig von den nachfolgenden Rechenschritten stets mit höchster Geschwindigkeit durchgeführt werden kann.

Beispielsweise bei der Rauhheitsmessung an spanabhebend bearbeiteten Oberflächen wird meist nach dem Oberflächenprofil quer zur Bearbeitungsrichtung gefragt. Für derartige Fälle ist vorgesehen, eine periodische Abtastbewegung des Lichtflecks quer zur Bewegungsrichtung bzw. Bearbeitungsrichtung der Materialoberfläche zu erzeugen.

Aus dem rekonstruierten Rauheitsprofil werden zweckmäßigerweise die üblichen Rauheitsmeßgrößen wie insbesondere der Mittenrauhwert $R_a$ und-/oder die gemittelte Rauhtiefe $R_z$ gebildet.

Die mit einer Laserdiode zur Erzeugung eines Lichtflecks auf der bewegte Materialoberfläche und einer Lichtempfangsanordnung versehene erfindungsgemäße Vorrichtung zeichnet sich dadurch aus, daß die Lichtempfangsanordnung, die in einem vorgegebenen Bereich von Reflexionswinkeln das von der Materialoberfläche reflektierte Licht erfaßt, als positionsempfindliche Lichtempfangsanordnung geschaltet ist, um ein Paar von Ausgangssignalen ($U_a$, $U_b$) zu liefern, das jeweils dem Schwerpunktwinkel des gestreut reflektierten Lichtes entspricht.

Das Oberflächenprofil der Materialoberfläche wird demnach mit einem zweckmäßigerweise feinen Lichtfleck abgetastet, um zu jeder Stelle den Winkel des reflektierten Lichtes und damit die Oberflächenneigung des betreffenden Materials zu erfassen. Um eine unmittelbare und problemlose Erfassung des Reflexionswinkels auch bei einer auftretenden Aufstreuung des reflektierten Lichtes zu gewährleisten, erfaßt die positionsempfindliche Lichtempfangsanordnung einen vorgebbaren, möglichst großen, in einer Ebene liegenden Streuwinkelbereich des von der Materialoberfläche gestreut reflektierten Lichts, um infolge des positionsabhängigen Ansprechverhaltens unmittelbar ein Paar von vom Schwerpunktwinkel abhängigen Ausgangssignalen zu liefern.

Gemäß einer praktisch besonders zweckmäßigen Ausgestaltung der erfindungsgemäßen Vorrichtung umfaßt die positionsempfindliche Lichtempfangsanordnung eine Vielzahl von photoelektrischen Wandlern, vorzugsweise Photodioden, welche auf einem Kreisbogen um den Lichtfleck angeordnet sind. Die photoelektrischen Wandler bzw. Photodioden sind vorzugsweise derart zu einer positionsempfindlichen Schaltung zusammengefaßt, dass am Ausgang unmittelbar der Schwerpunktwinkel bzw. ein vom Schwerpunktwinkel abhängiges Signalpaar vorliegt.

Die photoelektrischen Wandler können auf dem zugeordneten Kreisbogen eng aneinanderliegen oder zweckmäßigerweise auch derart angeordnet sein, daß der Lichtfleck durch Linsen auf einen jeweils zugeordneten Wandler abgebildet wird, wobei die Linsen dicht aneinanderliegend auf einem weiteren Kreisbogen angeordnet sind.

Die positionsempfindliche Lichtempfangsanordnung empfängt vorzugsweise stets das gesamt in den relativ großen Winkelbereich des Empfänger-Kreisbogens gestreut reflektierte Licht.

Eine praktische Weiterbildung der Vorrichtung zeichnet sich dadurch aus, daß die Ausgangssignale der photoelektrischen Wandler einer Widerstandskette zugeführt sind und das vom jeweiligen Reflexionswinkel bzw. Schwerpunktwinkel abhängige Ausgangssignal an der Widerstandskette abgreifbar ist. Hierbei ist vorzugsweise vorgesehen, daß die Widerstandskette in zwei Teilketten und das vom jeweiligen Reflexionswinkel bzw. Schwerpunktwinkel abhängige Ausgangssignal in zwei Teilspannungen unterteilt ist, wobei eine Teilspannung zwischen dem einen Ende der Widerstandskette und einem auf Bezugs- oder Massepotential liegenden Mittelpunkt zwischen den Teilketten und die andere Teilspannung zwischen dem anderen Ende der Widerstandskette und diesem Mittelpunkt abgreifbar ist. Beispielsweise aus dem Quotienten aus der Differenz und der Summe beiden Teilspannungen läßt sich eine direkte Information über den Schwerpunkt des gestreut reflektierten Lichts ermitteln. Dazu werden das vom Schwerpunktwinkel bzw. Reflexionswinkel abhängige Ausgangssignal bzw. die beiden Ausgangsteilspannungen der positionsempfindlichen Lichtempfangsanordnung zur Bildung eines unmittelbar dem Schwerpunktwinkel proportionalen bzw. für diesen repräsentativen Meßwertes vorzugsweise einer Auswerteelektronik zugeführt.

In der Auswerteelektronik sind auch die erforderlichen Mittel zur Bildung der oberflächen-Neigungswerte aus den Schwerpunkt- bzw. Reflexionswinkeln sowie Mittel zur Rekonstruktion der Rauheitsprofile aus den Neigungswerten und vorzugsweise auch mittel zur Bildung von Rauheitsmeßgrößen, wie insbesondere des Mittenrauhwertes $R_a$ und/oder der gemittelten Rauhtiefe $R_z$, aus dem rekonstruierten Rauheitsprofil vorgesehen.

Der Auswertevorrichtung ist gleichzeitig eine Steuerung zugeordnet, welche über einen Taktgeber die Abtastfrequenz der betreffenden Punktfolge auf der Materialoberfläche vorgibt. Es können Einrichtungen zur Erfassung der jeweiligen Material-Transportgeschwindigkeit vorgesehen sein, um unter anderem eine Anpassung der Abtastfrequenz an die jeweilige Transportgeschwindigkeit zu ermöglichen.

Gemäß einer weiteren Ausführungsvariante ist der Lichtfleck auf der Materialoberfläche in einer Ebene periodisch hinund herbewegbar, die den den photoelektrischen Wandlern zugeordneten Kreisbogen enthält. Dadurch ist die Möglichkeit geschaffen, Oberflächenprofile auch quer zur Verarbeitungsrichtung zu erzeugen, wie es beispielsweise bei spanabhebend bearbeiteten Oberflächen von Interesse ist. Sofern eine gleichmäßige Oberflächenbeschaffenheit vorliegt, genügt die Abtastung lediglich eines Teilbereiches dieser Fläche.

Eine zweckmäßige Ausgestaltung der Vorrichtung, die hierzu besonders geeignet ist, besteht darin, daß das von einer Kollimator-Optik erzeugte Parallelbündel durch ein Spiegelrad mit konstanter Geschwindigkeit periodisch ablenkbar und von einem telezentrischen Fθ-Objektiv in einem mit konstanter Geschwindigkeit bewegten und mit gleichbleibendem Einfallswinkel erzeugten Lichtfleck auf der Materialoberfläche umwandelbar ist. Der Umstand, daß der Lichtfleck stets mit konstanter Geschwindigkeit bewegt und mit gleichbleibendem Einfallswinkel erzeugt wird, gewährleistet stets eine zuverlässige Messung.

Weitere vorteilhafte Ausführungsvarianten der Erfindung sind in den abhängigen patentansprüchen angegeben.

Die Erfindung wird im folgenden anhand von Ausführungsbeispielen unter Bezugnahme auf die Zeichnung näher erläutert ; in dieser zeigt :

Figur 1 eine schematische Darstellung einer optischen Rauheitssonde zur optischen Erfassung des Rauheitsprofils einer Materialoberfläche,

Figur 2 ein Optikschema der optischen Rauheitssonde mit vergrößertem Arbeitsabstand,

Figur 3 einen Schnitt längs der Linie A-A in Figur 2,

Figur 4 ein Optikschema einer weiteren Ausführungsvariante der optischen Rauheitssonde, bei der der Lichtfleck auf der Materialoberfläche eine periodische Abtastbewegung ausführt,

Figur 5 einen Schnitt längs der Linie A-A in Figur 4, und

Figur 6 ein Blockschema einer der Lichtempfangsanordnung nachgeschalteten Auswerte- und Steuerlogik zur Prüfung der mittleren Rauheit an bewegten Objekten.

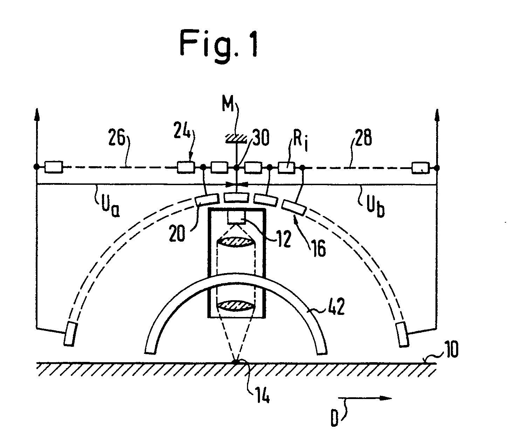

Die in Figur 1 schematisch dargestellte optische Rauheitssonde zur Erfassung des Rauheitsprofiles einer schnell durchlaufenden Materialoberfläche 10 umfaßt als Lichtquelle eine Laserdiode 12, deren Emmissionsbereich über eine weiter unten näher bechriebene Optik zur Bildung eine Lichtflecks 14 auf die Materialoberfläche 10 abgebildet wird. Es ist eine positionsempfindliche Lichtempfangsanordnung 16 vorgesehen, welche in der Zeichnungsebene einen Streuwinkelbereich des von der Materialoberfläche 10 gestreut reflektierten Lichts erfaßt, welcher durch einen annähernd einen Halbkreis bildenden Kreisbogen vorgegeben ist, auf dem nebeneinander eine Vielzahl von photoelektrische Wandler bildenden Photodioden 20 angeordnet sind.

Das von der Materialoberfläche 10 gestreut reflektierte Licht wird von einer torischen Linse 42 erfaßt und auf die auf dem Halbkreis verteilten Photodioden 20 konzentriert.

Die Laserdiode 12 mit zugeordneter Optik ist in einer zur Zeichnungsebene senkrechten Ebene gegenüber der Lichtempfangsanodnung 16 verkippt, um eine Abschattung des von der Materialoberfläche 10 zurückgeworfenen Lichts durch den Sender zu vermeiden.

Die torische Linse 42 ist im Schnitt ebenfalls etwa halbkreisförmig, wobei der Radius des zugeordneten Kreises jedoch kleiner als der Radius des den Photodioden 20 zugeordneten Kreises ist.

Den auf einem Kreisbogen angeordneten Photodioden 20 ist eine Widerstandskette 24 zugeordnet, welche aus einer Vielzahl von einzelnen Widerständen $R_i$ aufgebaut ist.

Die Widerstandskette 24 ist in zwei Teilketten 26, 28 aufgeteilt. Eine auf dem Kreisbogen in der Mitte angeordnete Photodiode 20 ist mit einem Mittelpunkt 30 verbunden, welcher zwischen den Teilketten 26, 28 liegt und das Massepotential M aufweist.

Die so realisierte positionsempfindliche Lichtempfangsanordnung 16 weist auf jeder Seite der auf dem Kreisbogen mittig angeordneten Empfangsdiode jeweils eine gleich große Anzahl weiterer Photodiode 20 auf, deren Ausgang jeweils mit einem zwischen zwei Widerständen $R_i$ der zugeordneten Teilkette 26 bzw. 28 liegenden Anschlußpunkt bzw. mit dem linken oder rechten äußeren Anschlußpunkt der Widerstandskette 24 verbunden ist.

Hierbei ist die auf dem zugeordneten Kreisbogen am linken äußeren Rand angeordnete Photodiode mit dem linken äußeren Anschluß und die am rechten äußeren Rand auf dem Kreis angeordnete Photodiode mit dem äußeren rechten Anschluß der Widerstandskette 24 verbunden. Die Ausgänge der jeweils weiter innen liegenden Photoempfangsdioden 20 sind jeweils dem nächsten, weiter innen liegenden Anschlußpunkt der Widerstandskette 24 zugeführt.

Die beschriebene positionsempfindliche Lichtempfangsanordnung 16 liefert demnach ein vom Schwerpunktwinkel bzw. Reflexionswinkel des gestreut reflektierten Lichts abhängiges Ausgangssignal, welches in Form von zwei Teilspannungen an der Widerstandskette 24 abgreifbar ist.

Die Teilspannung $U_a$ wird an der linken Teilkette 26, d. h. zwischen dem äußerst linken Anschluß der Widerstandskette 24 und Massepotential abgegriffen. Die zweite Teilspannung $U_b$ tritt zwischen der äußerst rechten Anschlußklemme der Widerstandskette 24 und dem Massepotential M, d. h. dem Mittelpunkt 30 auf.

Mit dem Pfeil D ist die Bewegungsrichtung des schnell durchlaufenden Materials angedeutet.

Über die beiden Teilspannungen $U_a$ und $U_b$ kann demnach unmittelbar ein vom jeweiligen Schwerpunktwinkel des von der Materialoberfläche 10 gestreut reflektierten Lichts abhängiger Meßwert ermittelt werden.

Der den Lichtfleck 14 erzeugende Lichtstrahl tritt in der Zeichenebene nahezu senkrecht auf die Materialoberfläche 10 auf. Der durch die Photodioden 20 der Lichtempfangsanordnung 16 gebildete Teilkreis ist bezüglich der durch den einfallenden Lichtstrahl gebildeten Gerade zentriert, d. h. der von der Materialoberfläche als Planspiegel gedacht, regulär reflektierte Strahl fällt auf die auf dem Kreisbogen in der Mitte angeordnete Photodiode.

Sind die beiden Teilspannungen $U_a$ und $U_b$ gleich groß, so ist der Schwerpunktwinkel der Reflexion an dem Flächenelement, das vom Lichtfleck getroffen wird, gleich Null ; das Element hat keinen Neigung gegen die Makro-Oberfläche. Wird die Teilspannung

$U_b$ gegenüber der Teilspannung $U_a$ größer, so hat sich das gestreut reflektierte Licht in Figur 1 nach rechts geneigt. Wird demgegenüber die Teilspannung $U_a$ größer, so ist dies die Folge einer Neigung des gestreut reflektierten Lichtes in der Zeichenebene gemäß Figur 1 nach links.

Die positionsempfindliche Lichtempfangsanordnung 16 liefert demnach unmittelbar eine vom jeweils auftretenden Schwerpunktwinkel abhängiges Ausgangssignal in Form von den beiden Teilsignalen $U_a$ und $U_b$. Eine für den jeweils auftretenden Schwerpunktwinkel repräsentative Größe ist durch den Tangens des Quotienten aus der Differenz der beiden Teilspannungen und der Summe dieser Teilspannungen gebildet.

Die gezeigte Rauheitssonde kann zur Überwachung schnell durchlaufender Materialien mit Profilhöhen bzw. Mittenrauhwerten $R_a$ verwendet werden, welche größer als die Wellenlänge $\lambda$ des erzeugten Laserlichts sind. Die Messung ist gegenüber Erschütterungen praktisch unempfindlich. Eine mögliche Anwendung ist demnach in der Überwachung der Rauheit von kaltgewalztem Blech für Karosserieteile direkt an der Walzstraße gegeben. Die Rauhheitsbereiche von Karosserieblechen liegen etwa bei $R_a$ gleich 0,8 bis 2,5 µm. Während in diesem Falle bei der eingangs genannten integralen Streukeulenauswertung lediglich mit $CO_2$-Laser-Licht. ($\lambda = 10,5$ µm) gearbeitet werden kann, können bei der erfindungsgemäßen Vorrichtung sowie beim erfindungsgemäßen Verfahren zur optischen Erfassung der Oberflächenprofile die wesentlich handlicheren Laserdioden eingesetzt werden. Die erfindungsgemäße Rauhheitssonde ist darüber hinaus für Oberflächenprofile auch von 100 µm Höhe durchaus noch anwendbar.

Mit dem feinen Lichtfleck 14 der beschriebenen Rauheitssonde wird nun die Materialoberfläche 10 dadurch abgetastet, daß zu jeder Stelle beispielsweise einer ausgewählten Punktfolge der Winkel des reflektierten Lichtes und damit die Oberflächenneigung erfaßt wird. Durch Integration der Neigungswerte längs der gewählten Punktfolge kann problemlos das jeweilige Höhenprofil rekonstruiert werden.

Die Erfassung des Reflexionswinkels ist trotz der im allgemeinen gegebenen Aufstreuung des reflektierten Lichtes mit der beschriebenen Vorrichtung möglich. Es wird nämlich das gesamte in einen großen Winkelbereich des Empfänger-Kreisbogens gestreut reflektierte Licht von den Photodioden 20 aufgenommen. Infolge der positionsempfindlichen Schaltung dieser Dioden wird unmittelbar ein Schwerpunktwinkel erfaßt, welcher den maßgeblichen Reflexionswinkel angibt, der der mittleren Neigung des Flächenelementes entspricht.

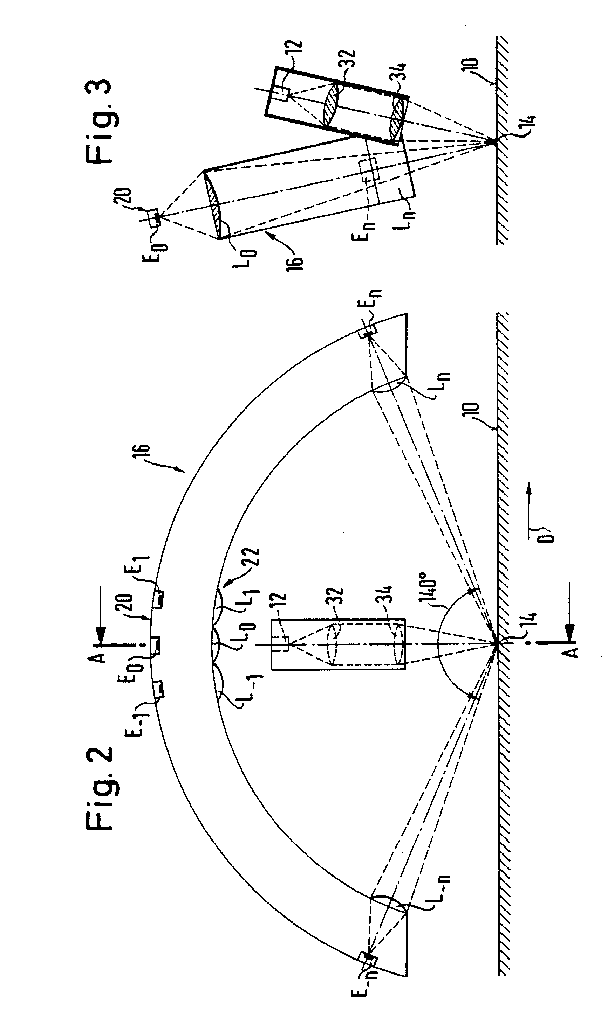

In Figur 2 ist ein Optikschema der optischen Rauheitssonde mit vergrößertem Arbeitsabstand gezeigt.

Mit dem Pfeil D ist wiederum die Bewegungsrichtung der Materialoberfläche 10 angedeutet.

Der Emissionsbereich der Laserdiode 12 wird von einer anamorphotischen Kollimatoroptik 32 entzerrt zunächst nach Unendlich und anschließend von einer weiteren Linse bzw. Optik 34 zur Bildung des Lichtflecks 14 auf die Materialoberfläche 10 abgebildet.

Der erzeugte Lichtfleck 14 weist einen Durchmesser von etwa 15 µm auf und tastet die mit einer Geschwindigkeit bis 20 m/s in Richtung des Pfeils D bewegte Materialoberfäche 10 ab.

Das von dieser Materialoberfläche 10 gestreut reflektierte Licht wird von in einem Kreisbogen angeordneten Linsen 22 bzw. $L_0$, $L_1$,.... $L_1$ und $L_{-1}$,.... $L_n$ jeweils auf die zugeordnete Photoempfangsdiode 20 bzw. $E_0$, $E_1$.... $E_n$ und $E_{-1}$ .... $E_n$ konzentriert.

Die der Lichtempfangsanordnung 16 zugeordneten Photodioden 20 sind widerum mit der Widerstandskette 24 verbunden (vgl. Fig. 1), die jedoch in dieser Figur 2 nicht dargestellt ist. Der Quotient der beiden an der Widerstandskette 24 abgegriffenen Teilspanungen $U_a$ und $U_b$ bzw. der Quotient der aus diesen beiden Teilspannungen gebildeten Differenz und Summe liefert widerum eine direkte Information über den Schwerpunktwinkel des gestreut reflektierten Lichts und damit den Neigungswinkel des vom Lichtfleck beleuchteten Flächenelementes. Wird der Tangens aus dem letztgenannten Wert gebildet, so ergibt sich die Neigung dieses Flächenelementes.

Der den Linsen $L_{-n}$ bis $L_n$ zugeordnete Kreisbogen kann einen Öffnungswinkel von etwa 120° bis 160° aufweisen und beträgt im vorliegenden Fall 140°.

Die Linsen $L_{-n}$ bis $L_n$ liegen auf dem zugeordneten Kreisbogen eng aneinander. Jede dieser Linsen konzentriert das auf sie auftreffende Licht auf den zugeordneten Photoempfänger bzw. die zugeordnete Photodiode $E_{-n}$ bis $E_n$.

Der Schwerpunktwinkel bzw. die Schwerpunktsignale werden mit einer Frequenz von 2 MHz abgefragt. Dem entspricht eine Folge von Meßpunkten auf der Oberfläche mit einem Abstand von 10 µm bei 20 m/s Materialgeschwindigkeit. Zu jedem dieser Meßpunkte wird mit dem Schwerpunkt des Reflexionswinkels der mittlere Neigungswinkel des betreffenden Flächenelementes gebildet, dessen Tangens die mittlere Neigung abgibt. Dieser Neigungswert kann in einen schnellen Meßwertspeicher gegeben werden.

Mit einem Computer wird dann aus der Folge der Neigungswerte durch Integration bzw. durch Multiplikation mit dem Meßpunktabstand das gewünschte Höhenprofil rekonstruiert. Aus diesem synthetischen Profil werden Rauheitsmeßgrößen wie insbesondere der Mittenrauhwert $R_a$ und die gemittelte Rauhtiefe $R_z$ gebildet. Diese Rauhheitsmeßgrößen können aus dem Rauheitsprofil nach den gleichen Verfahren wie bei mechanischen Rauheitsmeßgeräten ermittelt werden.

In einer Steuer- und Auswerteelektronik werden beispielsweise ein Meßtakt erzeugt, die beiden Teilspannungen $U_a$ und $U_b$ der positionsempfindlichen Diodenanordnung verstärkt, digitalisiert und in Neigungen umgerechnet. Aus diesen Neigungswerten können in derselben Auswerteelektronik dann die Höhenprofile konstruiert und schließlich die gewünschten Rauheitswerte errechnet werden.

Figur 3 zeigt einen Schnitt längs der Linie A-A in Figur 2. Aus dieser Schnittdarstellung ist zu erkennen, daß die die Linsen $L_{-n}$ bis $L_n$ sowie die Photodioden $E_{-n}$ bis $E_n$ aufweisende Lichtempfangsanordnung 16 sowie die die Laserdiode 12, die Kollimatoroptik 32 sowie das Objektiv 34 aufweisende Senderanordnung gegeneinander verkippt sind. Damit soll wiederum eine Abschattung des von der Materialoberfläche 10 gestreut reflektierten Lichts durch die senderanordnung vermieden werden.

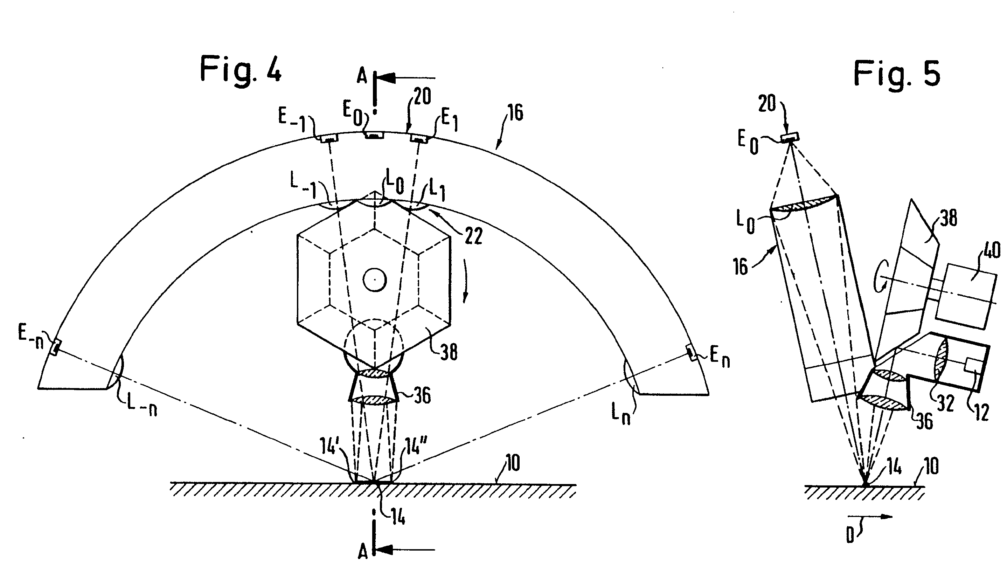

In den Figuren 4 und 5 ist eine weitere Ausführungsvariante der erfindungsgemäßen optischen Rauheitssonde gezeigt, bei der der Lichtfleck 14 in einer Ebene periodisch hin- und herbewegt wird, die den den Photodioden 20 bzw. $E_{-n}$ bis $E_n$ zugeordneten Kreisbogen enthält. Die Abtastbewegung des Lichtflecks 14 verläuft hierbei quer zur durch de Pfeil D (vgl. Fig. 5) angedeuteten Bewegungsrichtung der Materialoberfläche 10.

Das von der Kollimatoroptik 32 erzeugte Parallelbündel wird durch ein Spiegelrad 38 periodisch abgelenkt. das Spiegelrad 38 wird hierbei von einem Antrieb 40 mit konstanter Winkelgeschwindigkeit angetrieben. Das von der Kollimatoroptik 32 erzeugte und durch das Spiegelrad 38 mit konstanter Winkelgeschwindigkeit periodisch abgelenkte Parallelbündel wird von einem telezentrischen Fθ-Objektiv 36 in einen mit konstanter Geschwindigkeit bewegten und mit gleichbleibendem Einfallswinkel erzeugten Lichtfleck 14 auf der Materialoberfläche 10 umgewandelt.

Diese Ausführung eignet sich insbesondere für die Rauheitsmessung an spanabhebend bearbeitenden Oberflächen, bei denen das Oberflächenprofil quer zur Bearbeitungsrichtung von Interesse ist. Um in dieser Richtung während der Bearbeitung das profil aufnehmen zu können, wird der Lichtfleck 14 in der Ebene des die Photodioden 20 aufnehmenden Teilkreises und der Materialoberfläche 10 periodisch zwischen einer äußeren linken Lichtfleckstellung 14′ und einer äußeren rechten Lichtfleckstellung 14″ hin- und herbewegt. Die Richtung dieser Bewegung erstreckt sich quer zur durch den Pfeil D angedeuteten Bewegungsrichtung der abzutastenden Materialoberfläche 10. Kann eine gleichmäßige Oberflächenbeschaffenheit angenommen werden, so genügt, wie im beschriebenen Beispiel dargestellt (Fig. 4), die Abtastung eines entsprechend kleinen Oberflächenbereichs. Dieser Bereich erfaßt zweckmäßig einige Bearbeitungsrillen, deren Profil auf diese Weise erfaßt wird.

Der Lichtfleck kann wie auch bei den vorangehenden Ausführungsbeispielen einen Durchmesser von etwa 10 bis 15 µm aufweisen.

Die Abtastbewegung des Lichtflecks 14 erreicht mit einem mit 8000 Upm umlaufenden Spiegelrad 38 mit sechs Flächen und einer Abtastlänge von 15 mm beispielsweise eine Geschwindigkeit von 12 m/s.

Eine solche Abtastgeschwindigkeit ist in den meisten Fällen deutlich größer als die Transportgeschwindigkeit der Materialoberfläche 10 bzw. des betreffenden Werkstückes bei spanabhebender Bearbeitung. Die Rauhheitssonde mit periodisch abgelenktem Lichtfleck 14 erlaubt demnach die Erfassung des Rauheitsprofils an solchen spanabhebend bearbeiteten Oberflächen in der im allgemeinen interessierenden Richtung senkrecht zu den Bearbeitungsrillen und die Ermittlung der betreffenden Kennwerte aus diesem Rauheitsprofil.

Die übrigen Elemente der in den Figuren 4 und 5 gezeigten Variante entsprechen den betreffenden Elementen der Variante gemäß den Figuren 2 und 3, wobei gleichen Teilen wiederum gleiche Bezugszeichen zugeordnet sind.

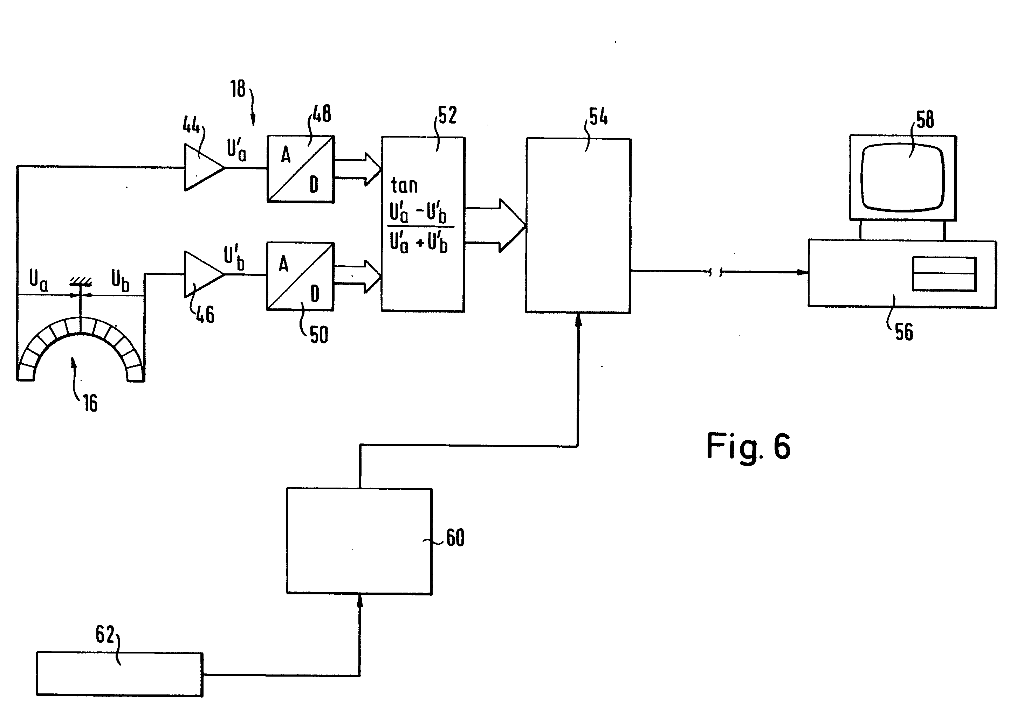

Figur 6 zeigt ein Blockschema einer Meßanlage zur kontinuierlichen Prüfung der mittleren Rauheit an bewegten Objekten, beispielsweise an kaltgewalztem Blech für Karosserieteile direkt an der Walzstraße.

Hierbei werden an den betreffenden Ausgängen der positionsempfindlichen Lichtempfangsanordnung 16 die beiden Teilspannungen $U_a$ und $U_b$ abgegriffen. Diese beiden Teilspannungen werden jeweils mittels eines Vorverstärkers 44, 46 einer der Lichtempfangsanordnung 16 nachgeschalteten Auswertelogik 18 bzw. Steuer- und Auswertelogik verstärkt. Die verstärkten Ausgangssignale $U'_a$ und $U'_b$ werden jeweils einem Analog/Digital-Wandler 48 bzw. 50 zugeführt. In einer den beiden Analog/Digital-Wandlern 48, 50 nachgeschalteten arithmetischen Logikeinheit 52 wird der Quotient aus der Differenz und der Summe der verstärkten, digitalisierten Signale $U'_a$ und $U'_b$ gebildet, um ein Maß für den jeweiligen Schwerpunktwinkel des von der Materialoberfläche 10 gestreut reflektierten Lichts bzw. den betreffenden Neigungswinkel des Flächenelements erhalten. Schließlich wird der Tangens dieses Neigungswinkels gebildet, so daß schließlich die Neigung dieses Flächenelementes ermittelt ist.

Der Ausgang der arithmetischen Logikeinheit 52 ist einer Mikroprozessor-Einheit 54 mit einem schnellen Meßwertspeicher zur Zwischenspricherung der mittleren Neigungswerte der betreffenden Flächenelemente zugeführt.

Ein Material-Geschwindigkeits-Sensor 62 liefert ein Ausgangssignal an ein Interface 60 zur Erfassung der Objektgeschwindigkeit, welches die Geschwindigkeitsinformation weiter an die Mikroprozessoreinheit 54 liefert.

Mittels eines PC-Computers 56 mit zugeordneter Bildschirmanzeige 58 wird dann anschließend aus der Folge der Neigungswerte durch Integration bzw. Summation, d. h. durch Multiplikation mit dem Meßabstand das gewünschte Höhenprofil rekonstruiert. Aus dem synthetischen Profil werden dann die Rau-heitsmeßgrößen wie insbesondere der Mittenrauh-wert $R_a$ und/oder die gemittelte Rauhtiefe $R_z$ ermittelt.

Infolge der Erfassung der Objektgeschwindigkeit kann die Meßfrequenz an die Material-Transportge-schwindigkeit angepaßt werden.

## Ansprüche

1. Verfahren zur optischen Erfassung des Rauheitsprofils einer bewegten Materialoberfläche (10), bei dem auf der Materialoberfläche ein feiner Lichtfleck (14) erzeugt und das reflektierte Licht einer Lichtempfangsanordnung (16) zugeführt wird, dadurch **gekennzeichnet**, daß für jeden abgetasteten Punkt der Materialoberfläche der Reflexionswinkel des reflektierten Lichts und damit der jeweilige Oberflächen-Neigungswert ermittelt wird, und daß das Rauheitsprofil aus den entlang der abgetasteten Punktfolge erhaltenen Neigungswerten rekonstruiert wird, daß zur Ermittlung der Reflexionswinkel jeweils der Richtungsschwerpunkt des gestreut reflektierten Lichts erfaßt wird, und daß die Rekonstruktion des Rauheitsprofils bzw. des profilschnitts entlang der abgetasteten Punktfolge durch Integration der Neigungswerte längs der abgetasteten Punktfolge durchgeführt wird, wobei insbesondere eine periodische Abtastbewegung des Lichtflecks quer zur Bewegungsrichtung der Materialoberfläche erzeugt wird, und daß vorzugsweise as dem rekonstruierten Rauheitsprofil in bekannter Weise Rauheitsmeßgrößen wie insbesondere der Mittenrauhwert ($R_a$) und/oder die gemittelte Rauhtiefe ($R_z$) gebildet werden.

2. Vorrichtung zur Durchführung des Verfahrens nach Anspruch 1, mit einer Laserdiode (12) zur Erzeugung eines Lichtflecks (14) auf der bewegten Materialoberfläche (10) und einer Lichtempfangsanordnung (16), dadurch **gekennzeichnet**, daß die Lichtempfangsanordnung (16), die in einem vorgegebenen Bereich von Reflexionswinkeln das von der Materialoberfläche (10) reflektierte Licht erfaßt, als positionsempfindliche Lichtempfangsanordnung geschaltet ist, um ein Paar von Ausgangssignalen ($U_a$, $U_b$) zu lie-fern, das jeweils dem Schwerpunktwinkel des gestreut reflektierten Lichts entspricht, wobei insbesondere die Lichtempfangsanordnung (16) in einer durch den Lichtfleck (14), die Bewegungsrichtung der Materialoberfläche (10) und die Richtung der regulären Reflexion an der als Planspiegel gedachten Materialoberfläche (10) definierten Ebene als Kreisbogen um den Lichtfleck angeordnet ist und daß bevorzugt außerdem die Lichtempfangsanordnung (16) aus einer Vielzahl photoelektrischer Wandler (20) gebildet wird, welche auf dem Kreisbogen dicht aneinandergereiht sind.

3. Vorrichtung nach Anspruch 2, dadurch **gekennzeichnet**, daß auf dem Kreisbogen eine Vielzahl von dicht aneinanderliegenden Linsen (22) angeordnet ist, die jeweils einem dahinterliegenden photoelektrischen Wandler (20) zugeordnet sind, um den Lichtfleck (14) auf den betreffenden Wandler abzubilden und/oder daß der den photoelektrischen Wandlern (20) zugeordnete Kreisbogen und gegebenenfalls der den Linsen (22) zugeordnete kreisbogen einen Öffnungswinkel von etwa 120° bis 160° besitzt.

4. Vorrichtung nach Anspruch 2 oder 3, dadurch **gekennzeichnet**, daß die Ausgangssignale der photoelektrischen Wandler (20) einer Widerstandskette (24) zugeführt sind und das vom jeweiligen Reflexionswinkel bzw. Schwerpunktwinkel abhängige Paar von Ausgangssignalen ($U_a$, $U_b$) an der Widerstandskette (24) abgreifbar ist und/oder daß die photoelektrischen Wandler (20) Photodioden sind.

5. Vorrichtung nach einem der Ansprüche 2 bis 4, dadurch **gekennzeichnet**, daß jeweils statt der Photodioden Stirnflächen von Lichtleitern auf dem betreffenden Kreis angeordnet sind, an deren Ausgangsflächen die Photodioden in positionsempfindlicher Schaltung angeordnet sind und/oder daß das vom Schwerpunktwinkel bzw. Reflexionswinkel abhängige Ausgangssignal bzw. dessen beide Teil-spannungen ($U_a$, $U_b$) zur Bildung eines unmittelbar für den Schwerpunkt- bzw. Reflexionswinkel repräsentativen, vorzugsweise dazu proportionalen Meßwerts einer Auswerteelektronik (18) zugeführt sind.

6. Vorrichtung nach einem der Ansprüche 2 bis 5, dadurch **gekennzeichnet**, daß die Auswerteelektronik (18) Mittel zur Bildung der Oberflächen-Neigungswerte aus den Schwerpunkt- bzw. Reflexionswinkeln sowie Mittel zur Rekonstruktion der Rauheitsprofile aus den Neigungswerten umfaßt, wobei insbesondere die Auswerteelektronik (18) in bekannter Weise Mittel zur Bildung von Rauheitsmeßgrößen, wie ins-besondere des Mittenrauhwerts ($R_a$) und/oder der gemittelten Rauhtiefe ($R_z$), aus dem rekonstruierten Rauheitsprofil umfaßt.

7. Vorrichtung nach einem der Ansprüche 2 bis 6, dadurch **gekennzeichnet**, daß die Lichtquelle ein Laser, insbesondere eine Laserdiode (12) ist und-/oder daß zur Erzeugung des Lichtflecks (14) der Emissionsbereich der Lichtquelle (12) von einer anamorphotischen Kollimatoroptik (32) nach Unendlich und anschließend von einer weiteren Linse bzw. einem Objektiv (34, 36) auf die Materialoberfläche (10) abgebildet ist.

8. Vorrichtung nach einem der Ansprüche 2 bis 7, dadurch **gekennzeichnet**, daß eine Laserdiode mit angekoppelter Lichtleitfaser verwendet wird und die Austrittsfläche dieser Faser von einer Linsen- oder Spiegeloptik in die Materialoberfläche (10) abgebildet wird.

9. Vorrichtung nach einem der Ansprüche 2 bis 8, dadurch **gekennzeichnet**, daß der Lichtfleck (14) auf der Materialoberfläche (10) in einer Ebene periodisch hin- und herbewegbar ist, die den den photoelektrischen Wandlern (20) zugeordneten Kreisbogen enthält, wobei vorzugsweise das von der Kollimatoroptik (32) erzeugte Parallelbündel durch ein Spiegelrad (38) mit konstanter Winkelgeschwindigkeit periodisch abgelenkt und von einem telezentrischen Fθ-Objektiv (36) in einen mit konstanter Geschwindigkeit bewegten und mit gleichbleibendem Einfallswinkel erzeugten Lichtfleck (14) auf der Materialoberfläche (10) umgewandelt wird.

10. Vorrichtung nach einem der Ansprüche 2 bis 9, dadurch **gekennzeichnet**, daß die Ablenkgeschwindigkeit des periodisch hin- und herbewegten Lichtflecks (14) größer als die Geschwindigkeit der dazu senkrecht bewegten Materialoberfläche (10) ist.

## Claims

1. A method of optically detecting the roughness profile of a moved material surface (10), wherein a fine light bead (14) is generated on the material surface and the reflected light is passed to a light receiving arrangement (16), characterized in that for each scanned point of the material surface the angle of reflection of the reflected light and thus the respective surface inclination value is determined ; in that the roughness profile is reconstructed from the inclination values obtained along the sequence of scanned points ; in that for the determination of the angle of reflection it is in each case the barycentric direction of the scattered reflected light that is detected ; and in that the reconstruction of the roughness profile, or of the profile section along the scanned sequence of points, is obtained by integration of the inclination values along the scanned sequence of points, wherein in particular a periodic scanning movement of the light bead is generated transverse to the direction of movement of the material surface, and preferably in that roughness measurement parameters such as in particular the mean roughness value $R_a$ and/or the average depth of roughness $R_z$ are formed in known manner from the reconstructed roughness profile.

2. Apparatus for carrying out the method in accordance with claim 1, comprising a laser diode (12) for generating a light bead (14) on the moved material surface (10) and a light receiving arrangement (16), characterized in that the light receiving arrangement (16) which detects the light reflected from the material surface (10) within a predetermined range of angles of reflection is connected up as a position sensitive light receiving arrangement in order to deliver a pair of output signals ($U_a$, $U_b$) which respectively corresponds to the barycentric angle of the scattered reflected light, wherein in particular the light receiving arrangement (16) is arranged as a circular arc around the light bead in a plane defined by the light bead (14), the direction of movement of the material surface (10) and the direction of regular reflection at the material surface (10) when imagined as a plane mirror, and further preferably in that the light receiving arrangement (16) is formed by a plurality of photoelectric converters (20) which are arranged close together in a row on the circular arc.

3. Apparatus in accordance with claim 2, characterized in that a plurality of lenses (22) are arranged close together on the circular arc with each lens being associated with a respective photoelectric converter (20) disposed behind it in order to form an image of the light bead (14) on the relevant converter, and/or in that the circular arc associated with the photoelectric converters (20) and optionally the circular arc associated with the lenses (22) has an aperture angle of approximately 120° to 160°.

4. Apparatus in accordance with claim 2 or 3, characterized in that the output signals of the photoelectric converter (20) are passed to a resistor chain (24) and the pair of output signals ($U_a$, $U_b$) dependent on the respective angle of reflection or predominant angle can be tapped off at the resistor chain (24), and/or in that the photoelectric converters (20) are photodiodes.

5. Apparatus in accordance with one of claims 2 to 4, characterized in that in each case the end surface of light conductors are arranged on the relevant circle in place of the photodiodes, with the photodiodes being arranged in a position sensitive circuit at the output surfaces of the light conductors, and/or in that the output signal, or its two part voltages ($U_a$, $U_b$) dependent on the angle or angle of reflection are passed to an electronic evaluation circuit (18) for the formation of a measured value directly representative of the angle or angle of reflection and preferably proportional thereto.

6. Apparatus in accordance with one of claims 2 to 5, characterized in that the electronic evaluation circuit (18) includes means for forming the surface inclination values from the barycentric or reflection angles and also means for reconstructing the roughness profile from the inclination values, wherein in particular the electronic evaluation circuit (18) includes, in manner known per se, means for forming roughness measurement parameters from the reconstructed roughness profile, such as in particular the mean roughness value $R_a$ and/or the average depth of roughness $R_z$.

7. Apparatus in accordance with one of claims 2 to 6, characterized in that the light source is a laser, in particular a laser diode (12), and/or in that for the generation of the light bead (14) the emission region of the light source (12) is imaged by an anomorphotic optical collimator system (32) at infinity and is subsequently imaged by a further lens or objective (34, 36) on the material surface (10).

8. Apparatus in accordance with one of claims 2 to 7, characterized in that a laser diode with a coupled on light conducting fibre is used and the exit surface of this fibre is imaged by a lens or optical mirror system at the material surface (10).

9. Apparatus in accordance with one of claims 2 to 8, characterized in that the light bead (14) is periodically movable to and fro on the material surface (10) in a plane which contains the circular arc associated with the photoelectric converters (20), wherein preferably the parallel beam generated by the optical collimator system (32) is periodically deflected at constant angular speed and is converted by a telecentric Fθ-objective (36) into a light bead (14) on the material surface (10), with the light bead being moved at constant speed and constant angle of incidence.

10. Apparatus in accordance with one of claims 2 to 9, characterized in that the speed of deflection of the light bead (14) which is periodically moved to and fro is larger than the speed of the material surface (10) moved perpendicular thereto.

## Revendications

1. Procédé pour l'acquisition optique du profil de la rugosité d'une surface (10) de matière en déplacement, dans lequel on produit une fine tache lumineuse (14) sur la surface de matière et on conduit la lumière réfléchie vers un récepteur de lumière (16), caractérisé en ce que :
pour chaque point analysé à la surface de matière, on détermine l'angle de réflexion de la lumière réfléchie et à l'aide de celui-ci la valeur considérée de l'inclinaison de la surface, et l'on retrace le profil de rugosité au moyen des valeurs d'inclinaison obtenues le long de la série de points analysés,
et pour la détermination de l'angle de réflexion, on saisit à chaque fois la direction du barycentre de la lumière réfléchie par diffraction,
et en ce que l'on procède au retraçage du profil de rugosité, ou de la section du profil, le long de la série de points analysés par intégration des valeurs d'inclinaison le long de la série de points analysés, et pour ce faire on procède en particulier à un déplacement périodique de la tache lumineuse transversalement à la direction de déplacement de la surface de matière, et en ce que de préférence l'on forme à partir du profil de rugosité retracé, d'une manière connue, des grandeurs donnant une mesure de la rugosité, comme en particulier la valeur médiane de rugosité (Ra) et/ou la profondeur moyenne de la rugosité (Rz).

2. Appareil destiné à la mise en oeuvre du procédé selon la revendication 1, comprenant une diode laser (12) pour produire une tache lumineuse (14) sur la surface (10) de matière en déplacement, et un récepteur de lumière (16), caractérisé en ce que le récepteur de lumière (16), qui capte la lumière réfléchie par la surface (10) de matière dans un secteur prédéterminé d'angles de réflexion, est connecté à la manière d'un récepteur sensible à la position, afin de délivrer un couple de signaux de sortie (Ua, Ub) qui correspond à chaque fois à l'angle du barycentre de la lumière réfléchie par diffraction, le récepteur de lumière (16) étant en particulier agencé sous la forme d'un arc de cercle autour de la tache lumineuse dans un plan défini par la tache lumineuse (14), par la direction de déplacement de la surface (10) de matière, et par la direction régulière de réflexion sur la surface de matière supposée être un miroir plan, et en ce que de préférence le récepteur de lumière (16) est en outre constitué d'une pluralité de convertisseurs photoélectriques (20), disposés en rang et serrés les uns contre les autres le long de l'arc de cercle.

3. Appareil selon la revendication 2, caractérisé en ce qu'une pluralité de lentilles (22) serrées les unes contre les autres est disposée le long de l'arc de cercle, chaque lentille étant associée à un convertisseur photoélectrique (20) respectif, afin de produire sur ce récepteur une image de la tache lumineuse (14) et/ou en ce que l'arc de cercle des convertisseurs photoélectriques (20), et le cas échéant des lentilles (22), présente un angle d'ouverture d'environ 120° à 160°.

4. Appareil selon l'une des revendications 2 ou 3, caractérisé en ce que les signaux de sortie des convertisseurs photoélectriques (20) sont appliqués à une chaîne de résistances (24) et que le couple de signaux de sortie (Ua, Ub) dépendant de l'angle de réflexion considéré, ou de l'angle du barycentre, peut être saisi au niveau de la chaîne de résistances (24) et/ou en ce que les convertisseurs photoélectriques (20) sont des photodiodes.

5. Appareil selon l'une des revendications 2 à 4, caractérisé en ce que des faces d'extrémité de conducteurs lumineux sont agencées sur l'arc de cercle considéré au lieu de photodiodes, et en ce que les photodiodes sont agencées aux faces d'extrémité de sortie des conducteurs lumineux et raccordées en circuit sensible à la position et/ou en ce que le signal de sortie dépendant de l'angle de réflexion, ou de l'angle du barycentre, ou les deux tensions partielles (Ua, Ub) de ce signal sont transmises à une unité électronique d'évaluation (18) pour délivrer une valeur de mesure directement représentative de l'angle de réflexion, ou du barycentre, et de préférence proportionnelle à cet angle.

6. Appareil selon l'une des revendications 2 à 5, caractérisé en ce que l'unité électronique d'évaluation (18) comprend des moyens destinés à produire des valeurs d'inclinaison de la surface à partir de l'angle de réflexion, ou du barycentre, ainsi que des moyens destinés à retracer le profil de rugosité à partir de ces valeurs d'inclinaison, l'unité électronique d'évaluation (18) comprenant de façon connue des moyens destinés à produire à partir du profil de rugosité retracé des grandeurs donnant une mesure de la rugosité, comme en particulier la valeur médiane de rugosité (Ra) et/ou la profondeur moyenne de la rugosité (Rz).

7. Appareil selon l'une des revendications 2 à 6, caractérisé en ce que la source lumineuse est un laser, en particulier une diode laser (12), et/ou en ce que pour la production de la tache lumineuse (14) l'image de la zone d'émission de la source lumineuse (12) est formée sur la surface de matière (10) par une optique collimatrice (32) anamorphotique mise au point à l'infini suivie d'une autre lentille ou objectif (34, 36).

8. Appareil selon l'une des revendications 2 à 7, caractérisé en ce qu'il utilise une diode laser et une fibre conductrice de la lumière associée et en ce que l'image de la face de sortie de la fibre est formée sur la surface (10) de matière par une optique à lentilles ou à miroirs.

9. Appareil selon l'une des revendications 2 à 8, caractérisé en ce que la tache lumineuse (14) est déplaçable périodiquement en va-et-vient sur la surface (10) de matière dans un plan qui contient l'arc de cercle des convertisseurs photoélectriques (20), et dans ce cas de préférence le faisceau parallèle produit par l'optique collimatrice (32) est dévié périodiquement par une roue à miroirs (38) à vitesse angulaire constante et transformé par un objectif télécentrique de type Fθ en une tache lumineuse en déplacement à vitesse constante et sous un angle d'incidence constant sur la surface (10) de matière.

10. Appareil selon l'une des revendications 2 à 9, caractérisé en ce que la vitesse de déviation de la tache lumineuse (14) déplacée périodiquement en va-et-vient est supérieure à la vitesse de la surface (10) de matière qui se déplace perpendiculairement à celle-ci.

## Fig. 1

Fig. 2

Fig. 3

EP 0 329 986 B1

# Fig. 4

# Fig. 5

EP 0 329 986 B1

13

$$\tan \frac{U'_a - U'_b}{U'_a + U'_b}$$

Fig. 6

EP 0 329 986 B1